# EUROPÄISCHE PATENTSCHRIFT

(11) **EP 0 866 395 B1**
(45) Veröffentlichungstag und Bekanntmachung des Hinweises auf die Patenterteilung: **30.10.2002**
(21) Anmeldenummer: 98102765.9
(22) Anmeldetag: 18.02.1998
(51) Int. Cl.: G05D 21/02, B01D 53/86

(54) **Verfahren und Vorrichtung zur Regelung der Eingabemenge eines Behandlungsmediums zur Verminderung des Stickoxidgehaltes in den Abgasen von Verbrennungsprozessen**
Method and device for controlling the input quantity of a treating medium for reducing the nitrogen concentration in the exhaust gases of a burning process
Dispositif et méthode pour contrôler la quantité introduite d'un moyen de traitement pour réduire la concentration d'azote dans des gaz d'échappement d'un processus de combustion

(30) Priorität: 21.03.1997 CH 68697
(43) Veröffentlichungstag der Anmeldung: 23.09.1998
(73) Patentinhaber: Von Roll Umwelttechnik AG, 8005 Zürich (CH)
(72) Erfinder: Mercx, Josef, 5401 Baden (CH); Wiederkehr, Marcel, 8607 Aathal-Seegräben (CH)
(74) Vertreter: Patentanwälte Schaad, Balass, Menzl & Partner AG

(56) Entgegenhaltungen:
- EP-A- 0 263 195
- EP-A- 0 549 904
- EP-A- 0 554 766
- WO-A-92/00136
- DE-A- 3 721 572
- DE-C- 4 334 071
- PATENT ABSTRACTS OF JAPAN vol. 015, no. 216 (C-0837), 4.Juni 1991 & JP 03 065217 A (ISHIKAWAJIMA HARIMA HEAVY IND CO LTD), 20.März 1991,
- PATENT ABSTRACTS OF JAPAN vol. 017, no. 618 (M-1510), 15.November 1993 & JP 05 187625 A (NIPPON STEEL CORP), 27.Juli 1993,
- PATENT ABSTRACTS OF JAPAN vol. 003, no. 109 (C-058), 12.September 1979 & JP 54 089972 A (MITSUBISHI HEAVY IND LTD), 17.Juli 1979,
- PATENT ABSTRACTS OF JAPAN vol. 011, no. 259 (C-441), 21.August 1987 & JP 62 061622 A (ISHIKAWAJIMA HARIMA HEAVY IND CO LTD), 18.März 1987,
- PATENT ABSTRACTS OF JAPAN vol. 095, no. 009, 31.Oktober 1995 & JP 07 163836 A (BABCOCK HITACHI KK), 27.Juni 1995,
- PATENT ABSTRACTS OF JAPAN vol. 097, no. 005, 30.Mai 1997 & JP 09 000871 A (BABCOCK HITACHI KK), 7.Januar 1997,

## Beschreibung

Die Erfindung betrifft ein Verfahren zur Regelung der Eingabemenge eines Behandlungsmediums zur Verminderung des Stickoxidgehaltes in den Abgasen von Verbrennungsprozessen gemäss dem Oberbegriff von Anspruch 1. Die Erfindung betrifft weiter eine Vorrichtung zur Regelung der Eingabemenge eines Behandlungsmediums gemäss dem Oberbegriff von Anspruch 8.

Bei der Behandlung von Abgasen aus Verbrennungsprozessen zur Minderung des Stickoxidgehaltes wird entweder Ammoniak vor einem Reduktionskatalysator dem Abgasstrom zugeführt (SCR-Prozess) oder es wird Ammoniak bzw. ein Stoff, der unter Temperatureinwirkung Ammoniak oder Ammonium-Verbindungen bildet (z.B. Harnstoff, Hirschhornsalz oder ähnliche Stoffe), in einer Nachbrennkammer in den Abgasstrom eingedüst (SNCR-Prozess). In beiden Fällen kann Ammoniak, das nicht bei der Reduktionsreaktion des Stickoxids verbraucht wurde, als sogenannter Ammoniakschlupf in den Abgasen ausgetragen werden, was zu einer Belastung der Atmosphäre führt.

Aus der EP 0 549 904 ist ein Verfahren zur Regelung der Eingabemenge eines Behandlungsmediums zur Verminderung des Stickoxidgehaltes in Abgasen von Verbrennungsprozessen bekannt, welches nicht nur den Stickoxidgehalt, sondern auch den Gehalt an unverbrauchtem Ammoniak möglichst niedrig hält. Dieses Verfahren weist den Nachteil auf, dass ein möglichst geringer Ammoniakschlupf angestrebt wird, und dabei ein höherer Stickoxidgehalt im Abgasstrom in Kauf genommen wird. Besonders nachteilig wirkt sich aus, dass dabei gesetzlich vorgeschriebene Grenzwerte für Stickoxidemissionen überschritten werden können.

Aus der JP 62061622 A und Patents Abstracts of Japan, 13 and 011, Nr. 259(C-441) 21.08.87 ist ein Verfahren zur Regelung der Eingabemenge von Ammoniak bekannt, bei dem zur Verminderung der verbrauchten Ammoniakmenge in Abhängigkeit vom Stickoxidgehalt ein gemittelter Stickoxidgehalt sowie eine Stellgrösse für die Eingabemenge generiert wird.

Es ist Aufgabe der vorliegenden Erfindung ein Verfahren zur Regelung der Eingabemenge eines Behandlungsmediums, z.B. Ammoniak, zur Verminderung des Stickoxidgehaltes in Abgasen von Verbrennungsprozessen vorzuschlagen, das insbesondere bezüglich der Einhaltung von Grenzwerten verbesserte Eigenschaften aufweist.

Diese Aufgabe wird gelöst mit einem Verfahren aufweisend die Merkmale gemäss Anspruch 1. Die Unteransprüche 2 bis 6 beziehen sich auf weitere, vorteilhafte Ausgestaltungen des Verfahrens. Die Aufgabe wird weiter gelöst mit einer Regelvorrichtung aufweisend die Merkmale gemäss Anspruch 8.

Die Aufgabe wird gelöst mit einem Verfahren zur Regelung der Eingabemenge eines Behandlungsmediums, insbesondere Ammoniak, zur Verminderung des Stickoxidgehaltes in den Abgasen von Verbrennungsprozessen, in dem in Abhängigkeit vom Stickoxidgehalt ein gemittelter Stickoxidgehalt sowie eine erste Stellgrösse für die Eingabemenge generiert wird, in dem in Abhängigkeit vom Behandlungsmediumschlupf eine zweite Stellgrösse für die Eingabemenge generiert wird, und in dem in Abhängigkeit vom gemittelten Stickoxidgehalt entweder nur die erste Stellgrösse oder auch die zweite Stellgrösse berücksichtigt wird.

Um insbesondere gesetzlich vorgeschriebene Grenzwerte einzuhalten wird der Stickoxidgehalt des gereinigten Verbrennungsgases ständig gemessen, wobei entsprechend den vorgeschriebenen Grenzwerten insbesondere ein gemittelter Stickoxidgehalt periodisch neu berechnet wird, z.B. über jeweils eine halbe Stunde oder über vierundzwanzig Stunden.

Nebst dem Stickoxidgehalt wird auch der Behandlungsmediumschlupf gemessen, und daraus, je nach Erfordernis, ein gemittelter Wert, zum Beispiel ein über. die Zeitdauer von 24 Stunden gemittelter Wert berechnet.

Die erfindungsgemässe Regelvorrichtung weist im wesentlichen zwei unterschiedliche Betriebszustände auf. Während einem ersten Betriebszustand, bei dem keine Gefahr des Überschreitens eines Emissionsgrenzwertes besteht, wird mit einem Stickoxidregler, in Abhängigkeit vom gemessenen Stickoxidgehalt, eine erste Stellgrösse für die Eingabemenge von Ammoniak berechnet, und mit einem Schlupfregler, in Abhängigkeit vom gemessenen Ammoniakschlupf, eine zweite Stellgrösse für die Eingabemenge von Ammoniak berechnet. Mit einer den beiden Reglern nachgeschalteten Minimalwertauswahlvorrichtung wird von der ersten und der zweiten Stellgrösse der kleinere der beiden Werte zur Steuerung der Eingabemenge von Ammoniak verwendet, was ein geringer Verbrauch an Ammoniak sowie eine geringer Ammoniakschlupf bewirkt. Die Regelvorrichtung geht in einen zweiten Betriebszustand über, sobald die Gefahr besteht, dass vorgeschriebene Grenzwerte, inbesondere bezüglich Stickoxidemission nicht eingehalten werden könnten. Der mittlere Stickoxidgehalt wird ständig gemessen und mit einem vorgegebenen Grenzwert verglichen. Sobald und solange der mittlere Stickoxidgehalt den Grenzwert überschreitet wird die Regelvorrichtung im zweiten Betriebszustand betrieben, wobei dieser das Umschalten bewirkende Grenzwert vorteilhafterweise unter dem gesetzlich vorgeschriebenen Emissionsgrenzwert liegt, um somit einen Sicherheitabstand einzuhalten. In diesem zweiten Betriebszustand wird nur die vom Stickoxidgregler erzeugte erste Stellgrösse zur Ansteuerung der Eingabemenge von Ammoniak verwendet, um den Stickoxidgehalt im Reingas möglichst tief zu halben.

Ein Vorteil des erfindungsgemässen Verfahrens ist darin zu sehen, dass in einem ersten Betriebszustand in den Abgasen des Verbrennungsprozesses sowohl der Stickoxidgehalt als auch der Gehalt an unverbrauchtem Ammoniak (Ammoniakschlupf) niedrig gehalten wird, und dass während einer Zeitspanne hoher Stickoxidemission ein zweiter Betriebszustand eingenommen wird, während dem nur der Stickoxidgehalt möglichst niedrig gehalten wird, um vorgegebene Grenzwerte, insbesondere bezüglich Stickoxidemission einzuhalten.

Die Erfindung wird an Hand mehrerer Ausführungsbeispiele im Detail beschrieben. Es zeigen:
- Fig. 1: eine schematische Darstellung eines Verbrennungsprozesses;
- Fig. 2: ein erstes Ausführungsbeispiel einer Regelvorrichtung;
- Fig. 3: ein zweites Ausführungsbeispiel einer Regelvorrichtung;
- Fig. 4a: ein Schlupfregler in einem ersten Betriebszustand;
- Fig. 4b: ein Schlupfregler in einem zweiten Betriebszustand.

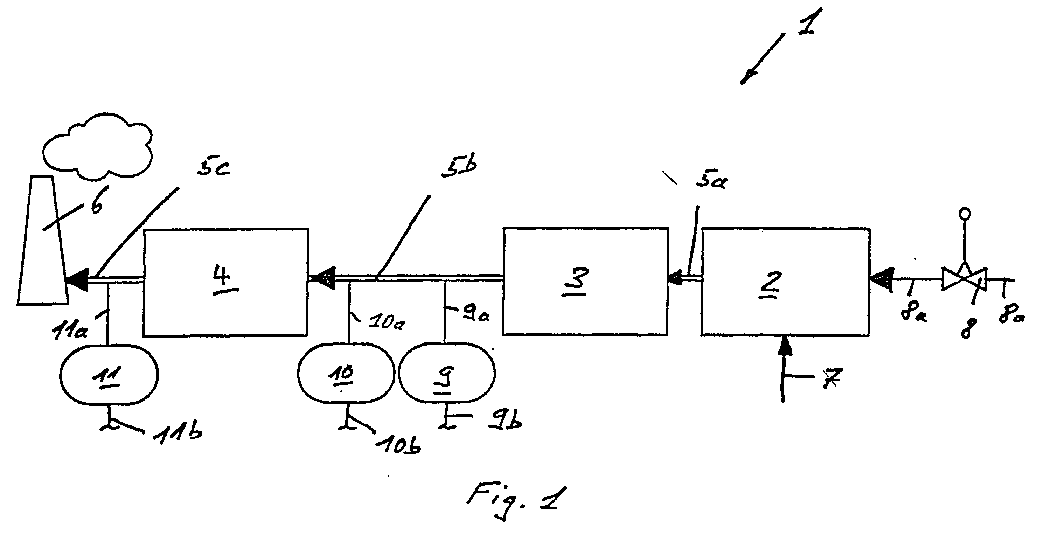

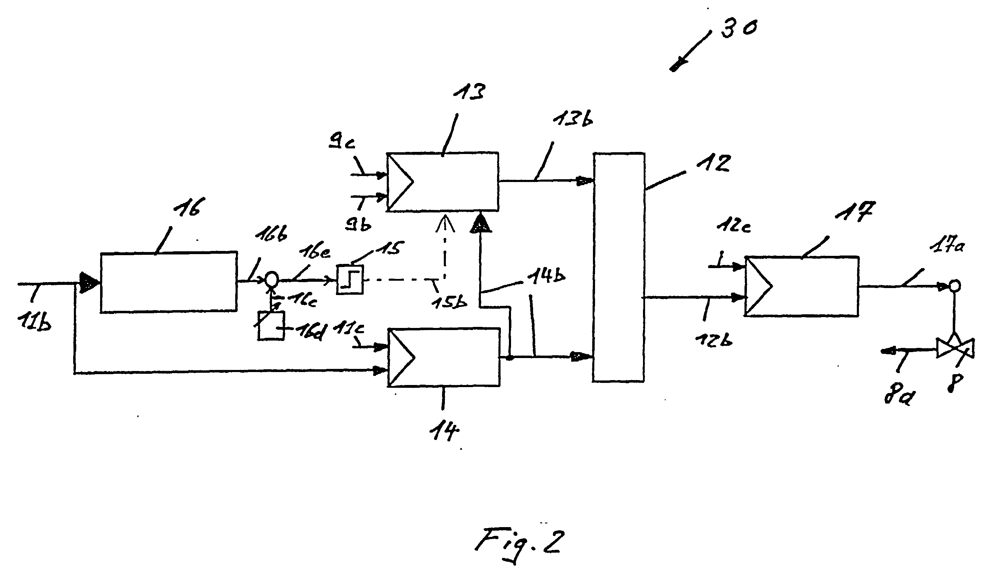

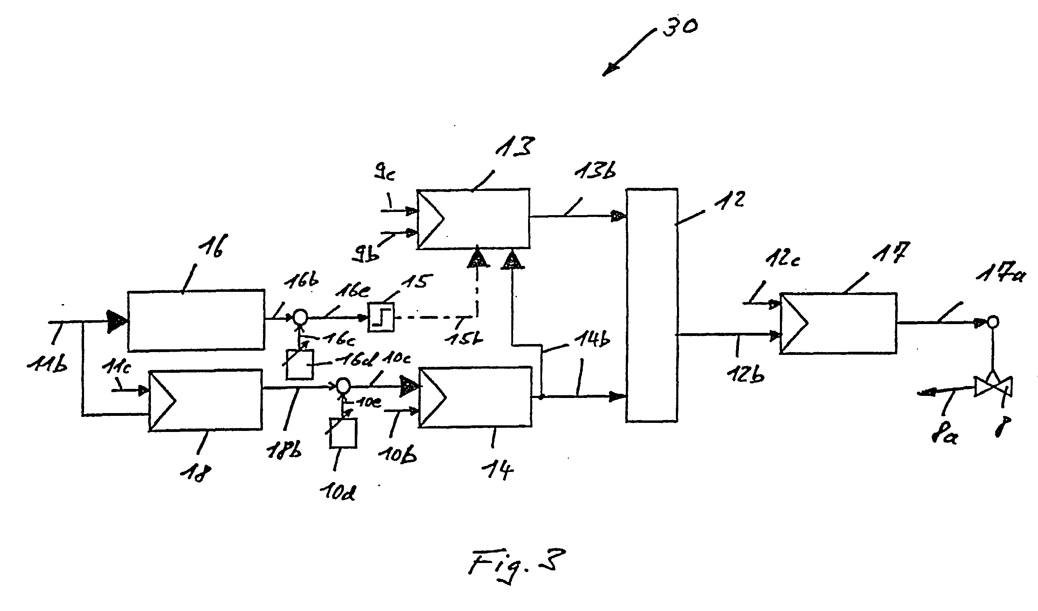

Die in Figur 1 dargestellte Verbrennungsvorrichtung 1 weist eine Feuerungsvorrichtung 2 auf, welcher einerseits über eine Zuleitung Brennstoff 7 und andererseits über eine weitere Zuleitung ein Behandlungsmedium 8a zugeführt wird, wobei insbesondere die Zuflussmenge an Behandlungsmedium 8a über eine Regelarmatur 8 und eine in den Figuren 2 und 3 dargestellte Regelvorrichtung 30 ansteuerbar ist. Im dargestellten Ausführungsbeispiel wird Ammoniak als Behandlungsmedium 8a verwendet. Die in der Feuerungsvorrichtung 2 erzeugten Verbrennungsgase 5a gelangen in den Kessel 3, verlassen diesen als Rohgas 5b, und gelangen nach dem Durchströmen der Rauchgasreinigungsvorrichtung 4 als Reingas 5c in den Schornstein 6, wo sie an die Atmosphäre abgegeben werden. Eine Messvorrichtung 9 zum Messen von Ammoniak ist über eine Verbindungsleitung 9a an das durchströmende Rohgas 5b gekoppelt, wobei der gemessene Behandlungsmediumschlupf (Ammoniak-Schlupf) 9b als elektrisches Signal einer nachgelagerten Regelvorrichtung 30 zugeführt wird. Eine Messvorrichtung 10 für Stickoxid kann ebenfalls über eine Verbindungsleitung 10a an das durchströmende Rohgas 5b gekoppelt sein, wobei der gemessene Stickoxidgehalt 10b des Rohgases als elektrisches Signal ebenfalls der nachgelagerten Regelvorrichtung 30 zugeführt werden kann. Mit einer weiteren Messvorrichtung 11 für Stickoxide, umfassend eine Verbindungsleitung 11a, wird der Stickoxidgehalt im Reingas 5c gemessen. Dieser gemessene Stickoxidgehalt 11b wird als elektrisches Signal der nachgelagerten Regelvorrichtung 30 zugeführt.

Fig. 2 zeigt ein erstes Ausführungsbeispiel einer Regelvorrichtung 30. Der gemessene Stickoxidgehalt 11b des Reingases wird einem Stickoxid-Regler 14 zugeführt, welcher, unter Berücksichtigung eines vorgegebenen Stickoxidgehalt-Sollwertes 11c eine Stellgrösse 14b erzeugt, welche sowohl einem Schlupfregler 13 als auch einer Minimalwertauswahlvorrichtung 12 zugeführt wird. Der Stickoxid-Regler erzeugt in Abhängigkeit des im Reingas 5c gemessenen Stickoxidwertes eine Stellgrösse 14b für die Zudosierung von Ammoniakwasser für die Entstickung des Rauchgases.

Der gemessene Ammoniakschlupf 9b des Rohgases 5b wird einem Schlupfregler 13 zugeführt, welcher, unter Berücksichtigung eines Ammoniak-Schlupfsollwertes 9c, eine zweite Stellgrösse 13b für die Zudosierung von Ammoniakwasser für die Entstickung des Rauchgases erzeugt, wobei die zweite Stellgrösse 13b ebenfalls der Minimalwertauswahlvorrichtung 12 zugeführt wird. Die vom Schlupfregler 13 erzeugte Stellgrösse 13b reduziert die Zudosierung von Ammoniakwasser, sofern der Ammoniak-Schlupf, gemessen im entstickten Rohgasstrom 5b, einen vorgegebenen Sollwert übersteigt. Die zweite Stellgrösse 13b bewirkt somit mit steigendem gemessenen Ammoniakschlupf 9b eine kleinere Zugabe von Ammoniakwasser.

In der Minimalwertauswahlvorrichtung 12 werden die beiden Stellgrössen 13b und 14b miteinander verglichen und der kleinere der beiden Werte als Stellgrösse 12b dem nachgelagerten Durchflussregler 17 zugeführt. Dieser Durchflussregler 17 dient dazu, dass die durch die Stellgrösse 12b vorgegebene Zuflussmenge von Ammoniakwasser, welche als Sollwert dem Durchflussregler 17 vorgegeben ist, auch zugefördert wird, was dadurch erzielt wird, dass mit einem nicht dargestellten Sensor die Zuflussmenge Ammoniak gemessen und als Istwert 12c dem Durchflussregler 17 zugeführt wird, welcher über die Stellgrösse 17a die Regelarmatur 8, beziehungsweise eine Dosiervorrichtung 8 umfassend beispielsweise eine Dosierpumpe, derart ansteuert, dass die durch die Stellgrösse 12b vorgegebene Menge Ammoniak 8a der Feuerungsvorrichtung 2 zugeführt wird.

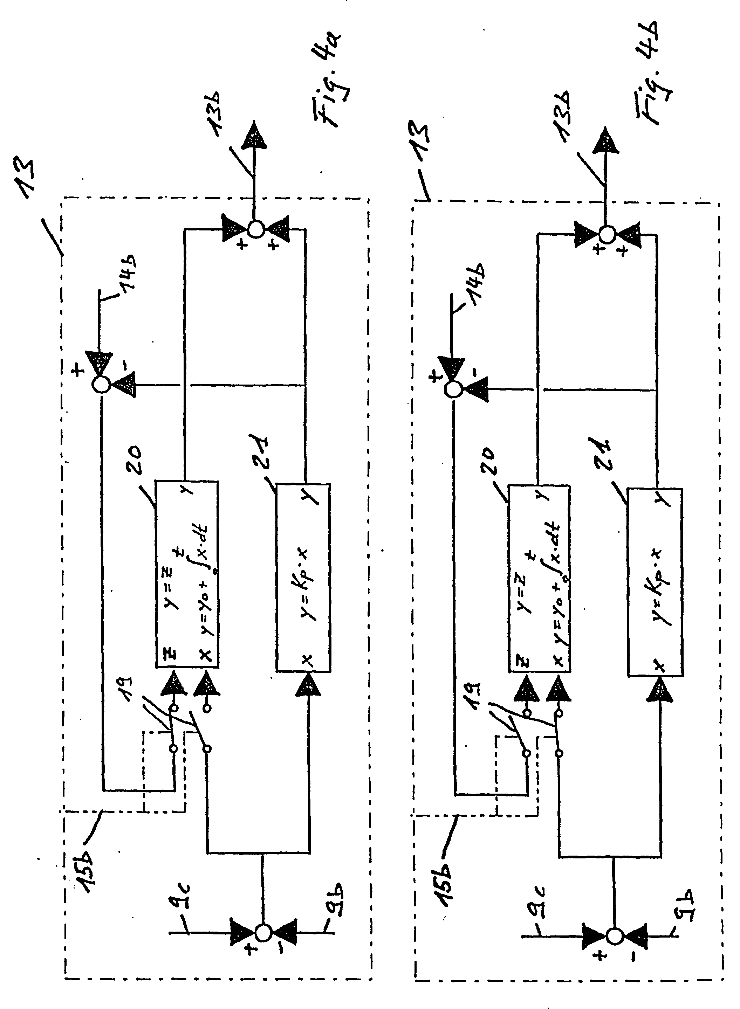

Die Regelvorrichtung 30 gemäss Fig. 2 weist weiter eine Mittelungsvorrichtung 16 auf, welche aus dem gemessenen Stickoxidgehalt einen zeitlichen Mittelwert bildet und diesen als gemittelter Stickoxidgehalt 16b, unter Differenzbildung mit einem Stickoxidgehalt-Sollmittelwert 16c, der mit Hilfe einer Eingabevorrichtung 16d vorgegeben ist, als Regelgrösse 16e einem Komparator 15 zuführt. In der Mittelungsvorrichtung 16 erfolgt eine fortlaufende Mittelwertsberechnung, in dem zum Beispiel Halbstunden-Mittelwerte oder Tagesmittelwerte berechnet werden. Übersteigt der gemittelte Stickoxidgehalt 16b den Stickoxidgehalt-Sollmittelwert 16c, so erzeugt der Komparator 15 ein logisches Steuersignal "1", das als Stellgrösse 15b dem Schlupfregler 13 zugeführt wird. Liegt der gemittelte Stickoxidgehalt 16b unter dem Stickoxidgehalt-Sollmittelwert 16c, so erzeugt der Komparator 15 ein logisches Steuersignal "0". Die Figuren 4a und 4b zeigen den Schlupfregler 13 in den zwei unterschiedlichen Betriebszuständen. Im ersten Betriebszustand gemäss Fig. 4a liegt als Stellgrösse 15b eine logische "1" an, und die Umschaltvorrichtung 19 weist die dargestelle Stellung auf. Im zweiten Betriebszustand gemäss Fig. 4b liegt als Stellgrösse 15b eine logische "0" an, und die Umschaltvorrichtung 19 weist die entsprechend dargestellte Stellung auf. Übersteigt der gemittelte Stickoxidgehalt 16b den Stickoxidgehalt-Sollmittelwert 16c so schaltet der Komparator auf das logische Steuersignal "1" und der Schlupfregler 13 geht in den ersten Betriebszustand gemäss Fig. 4a über. Während dem ersten Betriebszustand ist die vom Schlupfregler 13 abgegebene Stellgrösse 13b immer gleich der Stellgrösse 14b des Stickoxid-Reglers, weil im Proportional/Integralteil 20 der proportionale Pfad geschaltet ist, so dass der Ausgangswert y gleich dem Eingangswert z ist, während der Integrator ausgeschaltet ist. Diese Schaltung gewährleistet, dass die Stellgrösse 13b des Schlupfreglers 13 immer gleich der Stellgrösse 14b des Stickoxid-Reglers 14 ist, unabhängig vom Wert x, der aus der Differenz zwischen dem Behandlungsmedium-Schlupfsollwert 9c und dem Behandlungsmediumschlupf 9b gebildet wird. Im ersten Betriebszustand folgt die Stellgrösse 13b unmittelbar der Stellgrösse 14b und weist beim Schalten der Umschaltvorrichtung 19 gegebenenfalls einen Sprung auf. Die nachfolgend angeordnete Minimalwertauswahlvorrichtung 12 ist bestrebt den kleineren der beiden Stellgrössen 13b, 14b auszuwählen. Da diese beiden Werte im ersten Betriebszustand gleich gross sind ist gewährleistet, dass die Stellgrösse 12b der Stellgrösse 14b des Stickoxid-Reglers 14 entspricht. Somit regelt nur noch der Stickoxid-Regler 14 die Zuförderung von Ammoniakwasser, unabhängig vom auftretenden Schlupf, so dass die Regelung bestrebt ist den erforderlichen Stickoxid-Emissionsgrenzwert auf Kosten des Ammoniak-Schlupfes einzuhalten.

Der zweite Betriebszustand ist insbesondere auch dahingehend ausgelegt, dass während dem Schalten der Umschaltvorrichtung 19 von z auf x kein Sprung der Stellgrösse 13b auftritt, das heisst beim derartigen Umschalten, dass der Schalter zu z geöffnet und der Schalter zu x geschlossen wird. Im zweiten Betriebszustand ist im Proportional/Integralteil 20 ein Integralregler geschaltet, während im Proportionalteil 21 ein Proportionalregler geschaltet ist, so dass sich im Schlupfregler 13 während dem zweiten Betriebszustand gesamthaft ein sogenannten PI-Regler ergibt. In diesem zweiten Betriebszustand ist der Schlupfregler 13 bestrebt die Differenz zwischen dem Behandlungsmediumschlupf 9b und dem Behandlungsmedium-Schlupfsollwert 9c gegen Null zu bringen, in dem eine entsprechende Stellgrösse 13b erzeugt wird. Während dem zweiten Betriebszustand können die Stellgrössen 13b und 14b unterschiedliche Werte aufweisen, wobei die Minimalwertauswahlvorrichtung 12 den kleineren der beiden Werte auswählt und als Stellgrösse 12b dem Durchflussregler 17 vorgibt.

Das zweite, in Figur 3 dargestellte Ausführungsbeispiel einer Regelvorrichtung 30 weist gegenüber dem Ausführungsbeispiel gemäss Figur 2 den Unterschied auf, dass der Stickoxidgehalt mittels einer Kaskadenregelung geregelt wird, in dem einem unterlagerten Stickoxid-Regler 14 der ein höheres dynamisches Verhalten aufweisende Stickoxidgehalt 10b des Rohgases zugeführt wird, und dem überlagerten Stickoxid-Regler 18 das trägere Signal des Stickoxidgehaltes 11b des Reingases zugeführt wird, wobei dieser Stickoxid-Regler 18 eine Stellgrösse 18b erzeugt, die unter Differenzbildung mit einem in einer Eingabevorrichtung 10d vorgegebenen Rohgas-Stickoxidgehalt-Sollwert einen Vorgabewert für den Stickoxid-Regler 14 erzeugt. Eine derartige Kaskadenregelung weist den Vorteil eines besseren dynamischen Regelverhaltens auf. Mit Ausnehme dieser Kaskadenregelung sind die beiden Regelvorrichtung 30 gemäss Fig. 2 und Fig. 3 identisch ausgestaltet.

## Patentansprüche

1. Verfahren zur Regelung der Eingabemenge eines Behandlungsmediums (8a) zur Verminderung des Stickoxidgehaltes in den Abgasen von Verbrennungsprozessen, wobei in Abhängigkeit vom Stickoxidgehalt (11b) ein gemittelter Stickoxidgehalt (16b) sowie eine erste Stellgrösse (14b) für die Eingabemenge generiert wird, **dadurch gekennzeichnet, dass** in Abhängigkeit vom Behandlungsmediumschlupf (9b) eine zweite Stellgrösse (13b) für die Eingabemenge generiert wird,
und dass in Abhängigkeit vom gemittelten Stickoxidgehalt (16b) entweder nur die erste Stellgrösse (14b) oder auch die zweite Stellgrösse (13b) als Stellgrösse (12b) für die Eingabemenge verwendet wird.

2. Verfahren nach Anspruch 1, **dadurch gekennzeichnet, dass** sofern der gemittelte Stickoxidgehalt (16b) einen Stickoxidgehalt-Sollmittelwert (16c) übersteigt, nur die erste Stellgrösse (14b) verwendet wird.

3. Verfahren nach einem der Ansprüche 1 oder 2, **dadurch gekennzeichnet, dass**, sofern sowohl die erste Stellgrösse (14b) als auch die zweite Stellgrösse (13b) verwendbar ist, diejenige mit dem kleineren Wert verwendet wird.

4. Verfahren nach einem der vorhergehenden Ansprüche, **dadurch gekennzeichnet, dass** der gemittelte Stickoxidgehalt (16b) gemäss vorgebbaren Methoden, insbesondere entsprechend durch einschlägige Vorschriften festgelegte Methoden berechnet wird.

5. Verfahren nach einem der vorhergehenden Ansprüche, **dadurch gekennzeichnet, dass** der Stickoxidgehalt (10b,11b) sowohl im Rohgas (5b) als auch im Reingas (5c) gemessen wird, und dass die erste Stellgrösse (14b) mittels einer Kaskadenregelung aus den beiden Stickoxidgehalten (10b,11b) generiert wird.

6. Verfahren nach einem der Ansprüche 2 bis 5, **dadurch gekennzeichnet, dass** der Stickoxidgehalt-Sollmittelwert (16c) kleiner als der durch Vorschriften vorgegebene Grenzwert gewählt wird.

7. Verfahren nach einem der vorhergehenden Ansprüche, **dadurch gekennzeichnet, dass** beim Umschalten zwischen der ersten Stellgrösse (14b) und der zweiten Stellgrösse (13b) die Stellgrösse (12b) für die Eingabemenge stetig verändert wird.

8. Vorrichtung zur Regelung der Eingabemenge eines Behandlungsmediums (8a) zur Verminderung des Stickoxidgehaltes in den Abgasen von Verbrennungsprozessen, insbesondere zur Durchführung eines Regelungsverfahrens nach einem der Ansprüche 1 bis 7, mit einer Mittelungsvorrichtung (16) zur Berechnung eines gemittelten Stickoxidgehaltes (16b) und einem Stickoxid-Regler (14) zur Erzeugung einer ersten Stellgrösse (14b) für die Eingabemenge, **gekennzeichnet durch** einen Schlupfregler (13) für die Erzeugung einer zweiten Stellgrösse (13b) für die Eingabemenge sowie eine **durch** die Mittelungsvorrichtung (16) ansteuerbare Umschaltvorrichtung (19), welche entweder nur die erste Stellgrösse (14b) des Stickoxid-Reglers (14) oder auch die zweite Stellgrösse (13b) des Schlupfreglers (13) als Stellgrösse für einen den Durchfluss des Behandlungsmediums steuernden Durchflussregler (17) bestimmt.

9. Regelvorrichtung nach Anspruch 8, **dadurch gekennzeichnet, dass** die beiden Stellgrössen (13b,14b) des Stickoxid-Reglers (14) und des Schlupfreglers (13) einer Minimalwertauswahlvorrichtung (12) zugeführt sind, welche die kleinere der beiden Stellgrössen (13b,14b) dem Durchflussregler (17) als Stellgrösse zuführt.

10. Regelvorrichtung nach Anspruch 8 oder 9, **dadurch gekennzeichnet, dass** dem Stickoxid-Regler (14) unter Ausbildung einer Kaskadenregelung ein zweiter Stickoxid-Regler (18) vorgeschaltet ist.

11. Verbrennungsvorrichtung betrieben mit einem Verfahren nach einem der Ansprüche 1 bis 7 oder aufweisend eine Regelungsvorrichtung nach einem der Ansprüche 8 bis 10.

## Claims

1. Method for controlling the amount of a treatment medium (8a) introduced in order to reduce the nitrogen oxide content of the exhaust gases from combustion processes, with a mean nitrogen oxide content (16b) and a first controlled variable (14b) for the amount introduced being generated as a function of the nitrogen oxide content (11b), **characterized in that**
a second controlled variable (13b) for the amount introduced is generated as a function of the treatment medium slip (9b),
and **in that** either only the first controlled variable (14b) or else the second controlled variable (13b) is used as the controlled variable (12b) for the amount introduced, as a function of the mean nitrogen oxide content (16b).

2. Method according to Claim 1,
**characterized in that**, if the mean nitrogen oxide content (16b) exceeds a nominal nitrogen oxide content mean value (16c), only the first controlled variable (14b) is used.

3. Method according to one of Claims 1 and 2,
**characterized in that**, if both the first controlled variable (14b) and the second controlled variable (13b) can be used, the variable having the lower value is used.

4. Method according to one of the preceding claims,
**characterized in that** the mean nitrogen oxide content (16b) is calculated in accordance with methods which can be predetermined, in particular in accordance with methods which can be defined by relevant regulations.

5. Method according to one of the preceding claims,
**characterized in that** the nitrogen oxide content (10b, 11b) is measured both in the untreated gas (5b) and in the pure gas (5c), and **in that** the first controlled variable (14b) is generated from the two nitrogen oxide contents (10b, 11b) by means of a cascade control system.

6. Method according to one of Claims 2 to 5,
**characterized in that** the nominal nitrogen oxide content mean value (16c) is chosen to be less than the limit specified by regulations.

7. Method according to one of the preceding claims,
**characterized in that**, during a change between the first controlled variable (14b) and the second controlled variable (13b), the controlled variable (12b) for the amount introduced is varied continuously.

8. Apparatus for controlling the amount of a treatment medium (8a) introduced in order to reduce the nitrogen oxide content in the exhaust gases from combustion processes, in particular in order to carry out a control method according to one of Claims 1 to 7, having an averaging apparatus (16) for calculating a mean nitrogen oxide content (16b), and having a nitrogen oxide regulator (14) for producing a first controlled variable (14b) for the amount introduced, **characterized by** a slip regulator (13) for the production of a second controlled variable (13b) for the amount introduced, and by a changeover apparatus (19) which can be driven by the averaging apparatus (16) and determines either only the first controlled variable (14b) of the nitrogen oxide regulator (14) or else the second controlled variable (13b) of the slip regulator (13) as a controlled variable for a flow regulator (17) which controls the flow of the treatment medium.

9. Control apparatus according to Claim 8,
**characterized in that** the two controlled variables (13b, 14b) of the nitrogen oxide regulator (14) and of the slip regulator (13) are supplied to a minimum value selection apparatus (12) which supplies the smaller of the two controlled variables (13b, 14b) as the controlled variable to the flow regulator (17).

10. Control apparatus according to Claim 8 or 9,
**characterized in that** a second nitrogen oxide regulator (18) is connected upstream of the nitrogen oxide regulator (14), forming a cascade control system.

11. Combustion apparatus operated using a method according to one of Claims 1 to 7 or having a control apparatus according to one of Claims 8 to 10.

## Revendications

1. Procédé de régulation du débit d'injection d'un agent de traitement (8a) pour réduire la teneur en oxydes d'azote des fumées de processus de combustion, une teneur en oxydes d'azote moyennée (16b), ainsi qu'une première grandeur de commande (14b) pour le débit d'injection, étant générées en fonction de la teneur en oxydes d'azote (11b), **caractérisé en ce qu'**une seconde grandeur de commande (13b) pour le débit d'injection est générée en fonction de la fuite d'agent de traitement (9b), et **en ce qu'**en fonction de la teneur en oxydes d'azote moyennée (16b), seule la première grandeur de commande (14b), ou également la seconde grandeur de commande (13b), est utilisée sous forme de grandeur de commande (12b) pour le débit d'injection.

2. Procédé suivant la revendication 1, **caractérisé en ce que** seule la première grandeur de commande (14b) est utilisée dans la mesure où la teneur en oxydes d'azote moyennée (16b) dépasse par le haut une valeur moyenne de consigne de la teneur en oxydes d'azote (16c).

3. Procédé suivant l'une des revendications 1 et 2, **caractérisé en ce que**, dans la mesure où aussi bien la première grandeur de commande (14b) que la seconde grandeur de commande (13b) sont utilisables, la grandeur de valeur la plus faible est utilisée.

4. Procédé suivant l'une des revendications précédentes, **caractérisé en ce que** la teneur en oxydes d'azote moyennée (16b) est calculée suivant des méthodes prédéfinissables, en particulier conformément à des méthodes spécifiées par des prescriptions correspondantes.

5. Procédé suivant l'une des revendications précédentes, **caractérisé en ce que** la teneur en oxydes d'azote (10b, 11b) est mesurée aussi bien dans le gaz brut (5b) que dans le gaz épuré (5c), et **en ce que** la première grandeur de commande (14b) est générée au moyen d'une régulation en cascade à partir des deux teneurs en oxydes d'azote (10b, 11b).

6. Procédé suivant l'une des revendications 2 à 5, **caractérisé en ce que** la valeur moyenne de consigne de la teneur en oxydes d'azote (16c) est choisie à une valeur inférieure au seuil prédéfini par des prescriptions.

7. Procédé suivant l'une des revendications précédentes, **caractérisé en ce que**, lors de la commutation entre la première grandeur de commande (14b) et la seconde grandeur de commande (13b), la grandeur de commande (12b) pour le débit d'injection est modifiée en continu.

8. Dispositif de régulation du débit d'injection d'un agent de traitement (8a) pour réduire la teneur en oxydes d'azote des fumées de processus de combustion, en particulier pour la mise en oeuvre d'un procédé de régulation suivant l'une des revendications 1 à 7, comprenant un moyenneur (16) pour le calcul d'une teneur en oxydes d'azote moyennée (16b) et un régulateur d'oxydes d'azote (14) pour générer une première grandeur de commande (14b) pour le débit d'injection, **caractérisé par** un régulateur de fuite (13) pour générer une seconde grandeur de commande (13b) pour le débit d'injection, ainsi que par un dispositif de commutation (19), qui peut être commandé par le moyenneur (16) et détermine uniquement la première grandeur de commande (14b) du régulateur d'oxydes d'azote (14), ou également la seconde grandeur de commande (13b) du régulateur de fuite (13), sous forme de grandeur de commande pour un régulateur de débit (17) commandant le débit de l'agent de traitement.

9. Dispositif de régulation suivant la revendication 8, **caractérisé en ce que** les deux grandeurs de commande (13b, 14b) du régulateur d'oxydes d'azote (14) et du régulateur de fuite (13) sont transmises à un sélecteur de valeur minimale (12), qui transmet au régulateur de débit (17) la plus faible des deux grandeurs de commande (13b, 14b) sous forme de grandeur de commande.

10. Dispositif de régulation suivant l'une des revendications 8 et 9, **caractérisé en ce qu'**un second régulateur d'oxydes d'azote (18) est monté en amont du régulateur d'oxydes d'azote (14) en formant une régulation en cascade.

11. Dispositif de combustion exploité par une procédé suivant l'une des revendications 1 à 7 ou présentant un dispositif de régulation suivant l'une des revendications 8 à 10.
